(19) **Europäisches Patentamt / European Patent Office / Office européen des brevets**

(11) **EP 4 155 132 B1**

(12) **EUROPEAN PATENT SPECIFICATION**

(45) Date of publication and mention
of the grant of the patent:
**22.04.2026 Bulletin 2026/17**

(21) Application number: **22192569.6**

(22) Date of filing: **29.08.2022**

(51) International Patent Classification (IPC):
*G01S 7/03* (2006.01)    *G01S 13/931* (2020.01)
*G01S 7/40* (2006.01)    *H01Q 1/02* (2006.01)
*H01Q 1/32* (2006.01)    *H01Q 1/42* (2006.01)
*B60R 19/52* (2006.01)

(52) Cooperative Patent Classification (CPC):
**G01S 13/931; G01S 7/03; G01S 7/4047;
H01Q 1/02; H01Q 1/3233; H01Q 1/425;
B60R 2019/525; G01S 2013/93271**

(54) **VEHICLE COMPONENT**

**FAHRZEUGKOMPONENTE**

**COMPOSANT DE VÉHICULE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2021 JP 2021157716**

(43) Date of publication of application:
**29.03.2023 Bulletin 2023/13**

(73) Proprietor: **Toyoda Gosei Co., Ltd.
Kiyosu-shi, Aichi 452-8564 (JP)**

(72) Inventor: **DOKE, Shinichi
Kiyosu-shi, 452-8564 (JP)**

(74) Representative: **Kramer Barske Schmidtchen
Patentanwälte PartG mbB
European Patent Attorneys
Landsberger Strasse 300
80687 München (DE)**

(56) References cited:
WO-A1-2019/035296    US-A1- 2018 207 900
US-A1- 2021 063 530

**Description**

1. Field

The present disclosure relates to a vehicle component disposed in a path of electromagnetic waves transmitted and received by a radar device incorporated in the vehicle.

2. Description of Related Art

Generally, vehicles are equipped with a radar device (e.g., a millimeter wave radar device) that transmits electromagnetic waves (e.g., millimeter waves) toward the outside of the vehicle. The electromagnetic waves transmitted from the radar device strike and are reflected by an object outside the vehicle, including, for example, a vehicle leading the above-described vehicle and pedestrians. Then, the electromagnetic waves are received by the radar device. Using the transmitted and received electromagnetic waves, the radar device recognizes the object and detects, for example, the distance between the vehicle and the object.

When seen from the outside of the vehicle, the radar device has a reduced aesthetic appeal. To solve this problem, a millimeter wave radar device is disposed on the rear side of a front grille of the vehicle (see, for example, Japanese Laid-Open Patent Publication No. 2020-44869). In this case, the part of the front grille in front of the millimeter wave radar device includes a millimeter wave passage portion that permits the passage of millimeter waves. Further, in this case, when ice and snow adhere to the millimeter wave passage portion, the millimeter waves attenuate. This lowers the detection performance of the millimeter wave radar device.

Thus, a heating element is fixed to the millimeter wave passage portion of the front grille so as to melt the ice and snow that adhere to the millimeter wave passage portion. The heating element includes a heater wire that generates heat when energized and two resin sheets between which the heater wire is held. The heating element permits the passage of millimeter waves.

The above-described front grille includes a grille general portion that is a portion other than the millimeter wave passage portion. The grille general portion includes a base and a decorative layer that are laminated. The base is made of a transparent resin material. The decorative layer is located on the rear surface of the base. Thus, millimeter waves transmitted from a millimeter wave radar device incorporated in a different vehicle pass through the grill general portion. Accordingly, the above-described vehicle is not easily detected by the millimeter wave radar device of the different vehicle.

US 2021/0063530 A1 discloses a radio wave transmissive cover including a conductive thin film.

WO 2019/035296 A1 discloses a radio-wave transmission cover disposed in a radio-wave propagation path of a radio-wave radar device. Heating wires are integrally provided on the radio-wave transmission cover.

SUMMARY

This Summary is provided to introduce a selection of concepts in a simplified form that are further described below in the Detailed Description.

A vehicle component that solves the above-described problem is configured to be arranged in a path of an electromagnetic wave transmitted and received by a radar device, and comprises the features of claim 1.

Other features and aspects will be apparent from the following detailed description, the drawings, and the claims.

BRIEF DESCRIPTION OF DRAWINGS

Fig. 1 is a diagram of a vehicle component according to an embodiment applied to a front grille for a vehicle, schematically showing the front grille together with a millimeter wave radar device incorporated in the vehicle.

Fig. 2 is a diagram schematically showing the rear surface of the metal layer of the front grille.

Fig. 3 is a graph illustrating the relationship between the amounts of passage and reflection of millimeter waves and the distance between the centers of adjacent ones of the copper films in the metal layer having a mesh pattern.

Fig. 4 is a diagram schematically showing the function of the specific electromagnetic wave passage portion in the metal layer.

Fig. 5 is a diagram illustrating the relationship between a unit circle and the waveform of a millimeter wave.

Fig. 6 is a waveform graph illustrating the phase difference between reflected waves.

Fig. 7 is a diagram schematically showing an operation obtained when the reflected waves cancel out each other in the dielectric layer of the front grille.

Fig. 8 is a graph showing the relationship between the thickness of the dielectric layer of the front grille and the reflection amount of a millimeter wave.

Fig. 9 is a diagram schematically showing the rear surface of the metal layer of the front grille according to a modification.

Fig. 10 is a diagram schematically showing the front grille according to another modification, together with the millimeter wave radar device incorporated in the vehicle.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

In this specification, "at least one of A and B" should be understood to mean "only A, only B, or both A and B."

A vehicle component according to an embodiment applied to a front grille 12 for a vehicle 11 will now be described with reference to the drawings. In the following description, the direction in which the vehicle 11 travels forward will be referred to as the front, and the reverse direction will be referred to as the rear. The up-down direction and left-right direction refer to the up-down direction and left-right direction (width direction) of the vehicle 11, respectively.

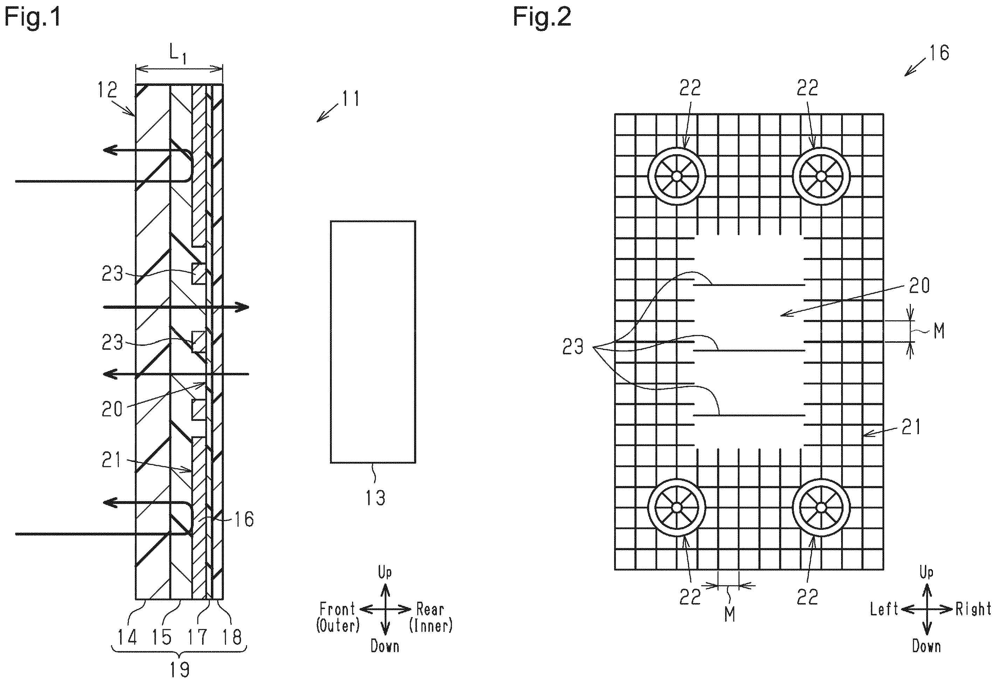

As shown in Fig. 1, the front grille 12 (an example of the vehicle component) is rectangular and is located at a front part of the vehicle 11, with the front grille 12 coupled to the vehicle body. A front-monitoring millimeter wave radar device 13 (an example of the radar device) is located behind the front grille 12 of the vehicle 11. The millimeter wave radar device 13 functions to transmit millimeter waves (an example of electromagnetic waves) toward the front of the vehicle 11 and receive the millimeter waves that have struck and have been reflected by an object outside the vehicle 11.

More specifically, the front grille 12 is located in a path of millimeter waves transmitted and received by the millimeter wave radar device 13. Millimeter waves are radio waves each having a wavelength of 1 mm to 10 mm and a frequency of 30 GHz to 300 GHz.

In the description of the front grille 12, the side of the ornamental surface (the left side in Fig. 1) of the front grille 12 is referred to as the outer side, and the side opposite the ornamental surface (the right side in Fig. 1) is referred to as the inner side. The front grille 12 is arranged upright such that its outer surface (ornamental surface) is oriented toward the front of the vehicle 11 and its inner surface is oriented toward the rear of the vehicle 11. In the arrangement of the front grille 12, the outer side of the front grille 12 corresponds to the front side of the vehicle 11, and the inner side of the front grille 12 corresponds to the rear side of the vehicle 11.

The front grille 12 is located such that the front-rear direction, in which the path of millimeter waves of the millimeter wave radar device 13 extends, corresponds to the thickness direction of the front grille 12. The front grille 12 includes a base layer 14, a metal layer 16, and a film layer 18. The metal layer 16 is bonded to the rear surface of the base layer 14, with a first adhesive layer 15 located in between. The film layer 18 is bonded to the rear surface of the metal layer 16, with a second adhesive layer 17 located in between. That is, the front grille 12 includes the base layer 14, first adhesive layer 15, metal layer 16, second adhesive layer 17, and film layer 18 that are laminated in this order from the front side.

The layers of the front grille 12 other than the metal layer 16 are made of material having a known relative permittivity such as a dielectric (e.g., synthetic resin material). That is, the base layer 14, first adhesive layer 15, second adhesive layer 17, and film layer 18 define a dielectric layer 19. The metal layer 16 is made of metal such as copper.

As shown in Figs. 1 and 2, the metal layer 16 includes a millimeter wave passage portion 20 and a millimeter wave reflection portion 21. The millimeter wave passage portion 20 is an example of an electromagnetic wave passage portion through which millimeter waves (electromagnetic waves) pass. The millimeter wave reflection portion 21 is an example of an electromagnetic wave reflection portion that reflects millimeter waves (electromagnetic waves). The millimeter wave passage portion 20 is located in the middle of the metal layer 16 facing the millimeter wave radar device 13 in the front-rear direction. The parts of the metal layer 16 other than the millimeter wave passage portion 20 are all included in the millimeter wave reflection portion 21.

The millimeter wave reflection portion 21 of the metal layer 16 is formed through, for example, pattern formation in which etching is performed for metal films (e.g., foils) pasted together on a base film or for metal films formed on a base film through deposition. The millimeter wave reflection portion 21 of the present embodiment is formed by depositing copper on a film layer and then patterning it into a mesh shape through etching. That is, the millimeter wave reflection portion 21 of the present embodiment includes a belt-shaped copper film extending in a mesh pattern (grid pattern). The apertures of the mesh of the millimeter wave reflection portion 21 are sized such that the millimeter wave reflection portion 21 sufficiently reflects millimeter waves that are to be used.

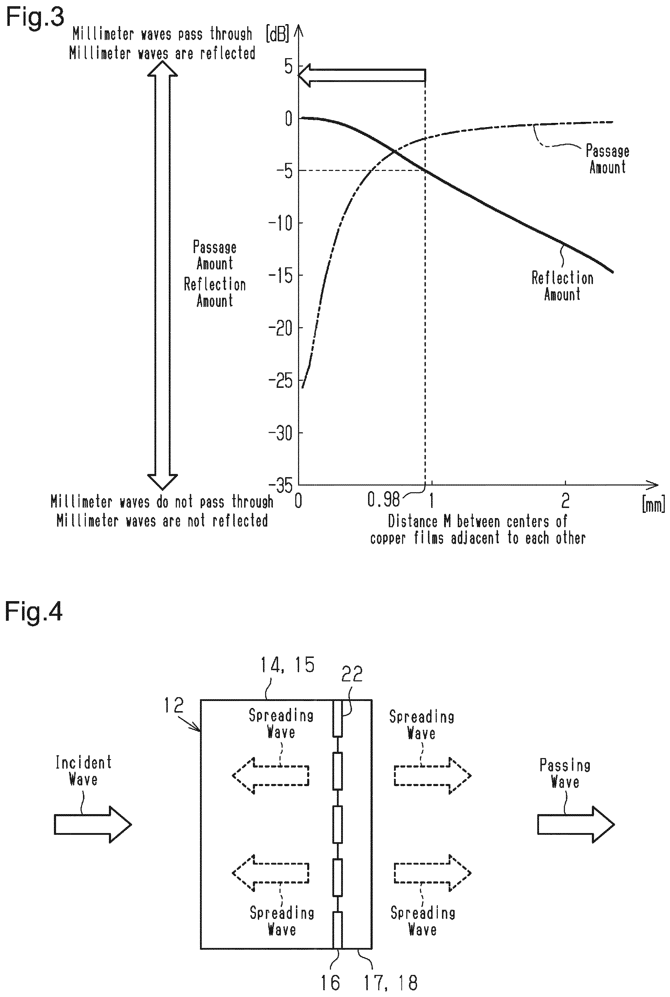

In this case, for example, when the millimeter waves each have a frequency of 76.5 GHz, the relationship between the amounts of millimeter waves that pass through and are reflected on the millimeter wave reflection portion 21 and the distance M between the centers of copper films adjacent to each other in the up-down direction and left-right direction is shown in the graph of Fig. 3. The solid line in the graph of Fig. 3 indicates the amount of millimeter waves reflected on the millimeter wave reflection portion 21. The long dashed double-short dashed line in the graph of Fig. 3 indicates the amount of millimeter waves passing through the millimeter wave reflection portion 21.

Generally, when the amount of millimeter waves reflected on the millimeter wave reflection portion 21 corresponds to a value that is greater than or equal to -5 dB, the reflection is sufficient. The graph of Fig. 3 indicates that the amount of millimeter waves reflected on the millimeter wave reflection portion 21 corresponds to a value greater than or equal to -5 dB when the distance M between the centers of the copper films adjacent to each other in the up-down direction and left-right direction of the millimeter wave reflection portion 21 is less than or equal to 0.98 mm.

Thus, millimeter waves are sufficiently reflected on the millimeter wave reflection portion 21 by sizing each aperture of the mesh of the millimeter wave reflection portion 21 such that the distance M between the centers of the copper films adjacent to each other in the up-down direction and left-right direction becomes less than or equal to 0.98 mm. Wavelength $\lambda$ of each millimeter wave having a frequency of 76.5 GHz in the air is calculated to be 3.92 mm by dividing the speed of the millimeter wave ($3.0\times10^8$ m/s) by the frequency of the millimeter wave ($76.5\times10^9$ Hz).

In this case, 3.92 mm, which is wavelength $\lambda$ of each millimeter wave having a frequency of 76.5 GHz in the air, is four times the 0.98 mm, which is the above-described distance M between the centers of the copper films adjacent to each other in the up-down direction and left-right direction of the millimeter wave reflection portion 21.

Accordingly, millimeter waves are sufficiently reflected on the millimeter wave reflection portion 21 by sizing each aperture of the mesh of the millimeter wave reflection portion 21 such that the distance M between the centers of the copper films is one-fourth or smaller of wavelength $\lambda$ of each millimeter wave in the air. That is, since the width of each copper film is substantially negligible, millimeter waves are sufficiently reflected on the millimeter wave reflection portion 21 by sizing the vertical and horizontal lengths of each aperture of the mesh of the millimeter wave reflection portion 21 to be one-fourth or smaller of wavelength $\lambda$ of each millimeter wave in the air.

As shown in Fig. 2, part of the millimeter wave reflection portion 21 includes specific electromagnetic wave passage portions 22 through which only electromagnetic waves each having a specific frequency pass. That is, only electromagnetic waves each having a specific frequency other than millimeter waves pass through the specific electromagnetic wave passage portions 22. In other words, the specific electromagnetic wave passage portions 22 are different from the millimeter wave passage portion 20 in that millimeter waves do not pass through. The specific electromagnetic wave passage portions 22 are each formed by forming the copper film of the millimeter wave reflection portion 21 into a special shape (pattern). In the present embodiment, the millimeter wave reflection portion 21 of the metal layer 16 includes four specific electromagnetic wave passage portions 22. The functions of the specific electromagnetic wave passage portions 22 will now be described.

As shown in Fig. 4, when electromagnetic waves each having a specific frequency strike the specific electromagnetic wave passage portions 22 as incident waves, the incident waves spread in every direction as spreading waves. The spreading waves toward the incident waves are struck and offset by the incident waves. In contrast, the spreading waves toward the side opposite the incident waves proceed as passing waves. In this manner, the specific electromagnetic wave passage portions 22 allow only electromagnetic waves each having a specific frequency to pass through.

As shown in Figs. 1 and 2, the millimeter wave passage portion 20 includes an opening surrounded by the millimeter wave reflection portion 21. The millimeter wave passage portion 20 includes heater wires 23 (electrically-heated wires) which generate heat when energized by a power supply device (not shown). The millimeter wave passage portion 20 includes, for example, three heater wires 23 that extend in the left-right direction and are arranged at equal intervals in the up-down direction. That is, the front grille 12 includes the heater wires 23 arranged on the millimeter wave passage portion 20 of the metal layer 16.

Thickness $L_1$ of the dielectric layer 19 of the front grille 12 is set based on the following equation 1 such that the dielectric layer 19 is in an optimal state for millimeter waves to pass through. In the following equation 1, n represents an integer greater than or equal to 0, and $\lambda g$ represents the wavelength of each millimeter wave in the dielectric.

$$L_1 = n\frac{\lambda g}{2} \quad \text{(equation 1)}$$

Next, the calculation of thickness $L_1$ of the dielectric layer 19 that is optimal for the passage of millimeter waves will be described.

The above-described equation 1 is obtained as follows. In this case, the dielectric layer 19 of the front grille 12 is made of one type of synthetic resin material. That is, the base layer 14, first adhesive layer 15, second adhesive layer 17, and film layer 18 of the front grille 12 are made of the same type of synthetic resin material.

In this case, an F-matrix representing the dielectric layer 19 is represented by the following equation 2. In the following equation 2, $\beta$ represents a propagation constant, L represents the thickness of the dielectric, B represents a normalized susceptance (imaginary part), $Z_0$ represents a characteristic impedance, j represents an imaginary unit, and $\varepsilon_r$ represents the relative permittivity of the dielectric.

$$F = \begin{bmatrix} 1 & 0 \\ j\frac{B}{Z_0} & 1 \end{bmatrix} \begin{bmatrix} \cos\beta L & jZ\sin\beta L \\ j\frac{\sin\beta L}{Z} & \cos\beta L \end{bmatrix}$$

$$= \begin{bmatrix} \cos\beta L & j\frac{Z_0}{\sqrt{\varepsilon_r}}\sin\beta L \\ j\frac{B\cos\beta L + \sqrt{\varepsilon_r}\sin\beta L}{Z_0} & -\frac{B\sin\beta L}{\sqrt{\varepsilon_r}} + \cos\beta L \end{bmatrix} = \begin{bmatrix} A & E \\ C & D \end{bmatrix} \quad \text{(equation 2)}$$

From the F-matrices in the above-described equation 2, a reflection coefficient R is calculated using the following equation 3. The reflection coefficient R represents the degree of reflection occurring in an interface (the ratio of reflected waves to incident waves). The reflection coefficient R is 0 when no reflection occurs (when waves completely pass through).

$$R = \frac{A + \frac{E}{Z_0} - Z_0 C - D}{A + \frac{E}{Z_0} + Z_0 C + D} \quad \text{(equation 3)}$$

The millimeter waves all pass (completely pass) through the dielectric layer 19 on condition that the reflection coefficient R is 0. Thus, the value of the numerator in the above-described equation 3 simply needs to be 0. Accordingly, by substituting the values of the F matrices in the above-described equation 2 into the expression of the numerator in equation 3 and organizing these values, the following equation 4 is obtained.

$$A + \frac{E}{Z_0} - Z_0 C - D$$

$$= \cos\beta L + j\frac{\sin\beta L}{\sqrt{\varepsilon_r}} - j(B\cos\beta L + \sqrt{\varepsilon_r}\sin\beta L) + \frac{B\sin\beta L}{\sqrt{\varepsilon_r}} - \cos\beta L$$

$$= \frac{B\sin\beta L}{\sqrt{\varepsilon_r}} - \frac{j}{\sqrt{\varepsilon_r}}(\varepsilon_r - 1)\sin\beta L - jB\cos\beta L \quad \text{(equation 4)}$$

The above-described equation 4 indicates that for the numerator to become 0, the equations B = 0 and $\beta L = 0$ need to be satisfied. The relative permittivity of air is 1. Thus, when millimeter waves enter the dielectric layer 19 from the air, the following equation 5 is obtained by substituting 1 into $\varepsilon_r$ in the above-described equation 4 and organizing the values.

$$\frac{B\sin\beta L}{\sqrt{1}} - \frac{j}{\sqrt{1}}(1 - 1)\sin\beta L - jB\cos\beta L = B\sin\beta L - jB\cos\beta L$$

$$= B(-j\cos\beta L + \sin\beta L) = 0 \quad \text{(equation 5)}$$

Thus, the above-described equation 5 satisfies the equation B = 0. When the equation B = 0 is satisfied, the equation $\sin\beta L = 0$ is satisfied. Accordingly, the following equation 6 is obtained.

$$\beta L = n\pi \quad \text{(equation 6)}$$

The relationship between wavelength $\lambda$ and the propagation constant $\beta$ is expressed in the following equation 7.

$$\beta = \frac{2\pi}{\lambda g} \quad \text{(equation 7)}$$

By substituting the above-described equation 7 into the above-described equation 6 and organizing the values, the following equation 8 is obtained.

$$L = n\frac{\lambda g}{2} = n\frac{\lambda}{2\sqrt{\varepsilon_r}} \quad \text{(equation 8)}$$

By applying thickness $L_1$ of the dielectric layer 19 to L of the above-described equation 8, the above-described equation 1 is obtained. In the above-described equation 8, $\lambda$ represents the wavelength of each millimeter wave in the air.

In the above-described equation 8, the equation $\lambda g = \lambda / \sqrt{\varepsilon r}$ is satisfied.

If the base layer 14, first adhesive layer 15, second adhesive layer 17, and film layer 18 of the dielectric layer 19 in the front grille 12 are made of different resin materials, these thicknesses simply need to be individually set based on the above-described equation 1. That is, the thicknesses of the base layer 14, first adhesive layer 15, second adhesive layer 17, and film layer 18 simply need to be each set to a length that is optimal for the passage of millimeter waves, and the lengths simply need to be combined.

The operation of the front grille 12 will now be described.

As shown in Fig. 1, when millimeter waves are transmitted from the millimeter wave radar device 13, some of the millimeter waves pass through a part of the front grille 12 that corresponds to the millimeter wave passage portion 20 of the metal layer 16. After passing through the front grille 12, the millimeter waves strike and are reflected by an object outside the vehicle 11 including, for example, a vehicle leading the vehicle 11 and pedestrians. Then, the millimeter waves again pass through the part of the front grille 12 that corresponds to the millimeter wave passage portion 20 of the metal layer 16 and are received by the millimeter wave radar device 13. Using the transmitted and received millimeter waves, the millimeter wave radar device 13 recognizes the object and detects, for example, the distance between the vehicle 11 and the object.

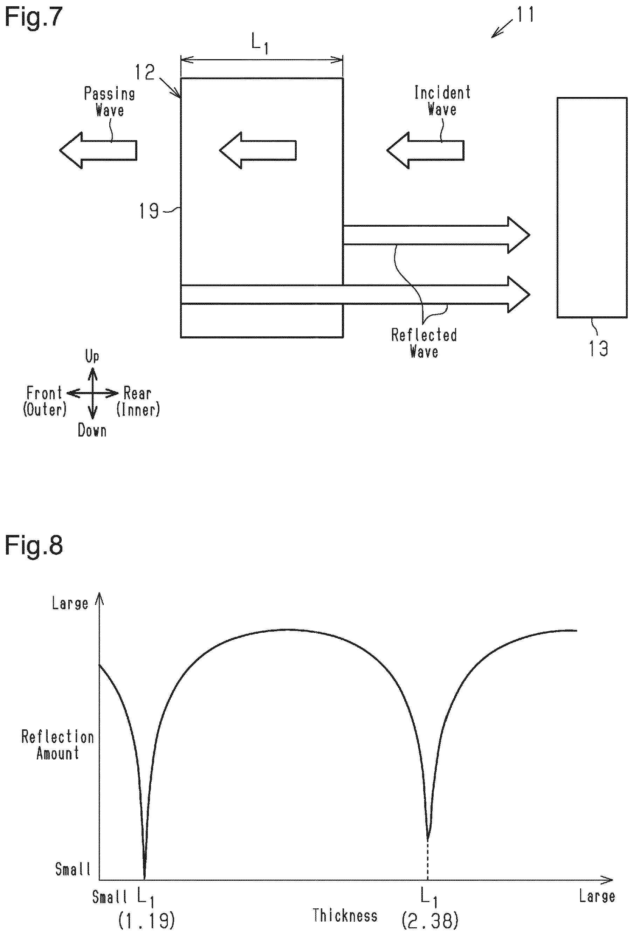

As shown in Figs. 1 and 7, some of the millimeter waves (incident waves) that have been transmitted from the millimeter wave radar device 13 and have entered the dielectric layer 19 are reflected on the interface of the dielectric layer 19. In the case of using the dielectric layer 19, the front surface of the dielectric layer 19 (front surface of base layer 14) and the rear surface of the dielectric layer 19 (rear surface of film layer 18) each correspond to the interface with air.

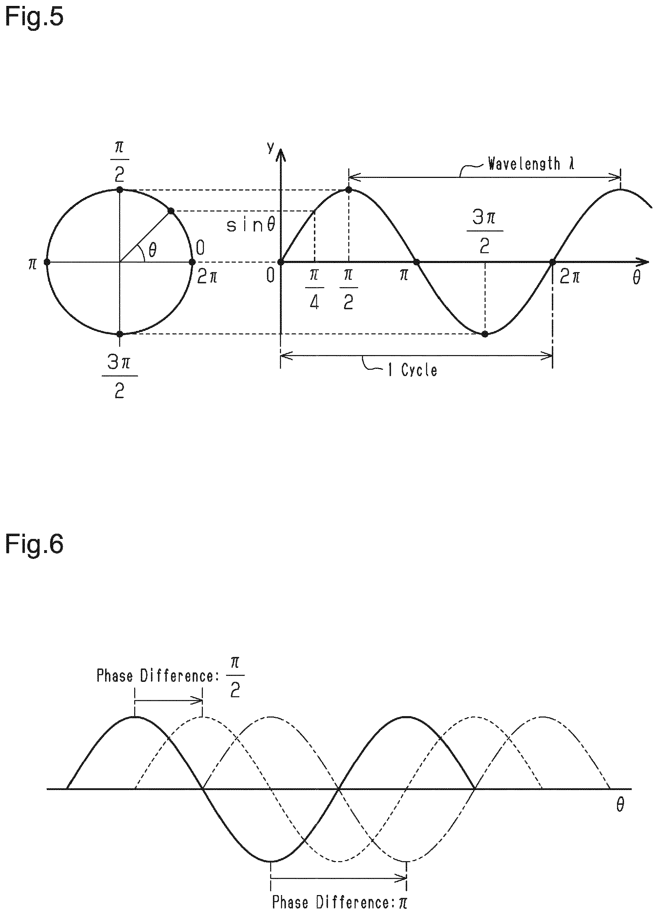

Some of the incident waves are reflected rearward on the front and rear surfaces of the dielectric layer 19. As shown in Figs. 5 and 6, phase deviation (phase difference) occurs between the millimeter waves (reflected waves) reflected on the front surface of the dielectric layer 19 and the millimeter waves (reflected waves) reflected on the rear surface of the dielectric layer 19.

In this case, thickness $L_1$ of the dielectric layer 19 satisfies the above-described equation 1. Thus, in the dielectric layer 19, the phase between each reflected wave on the front surface and the corresponding reflected wave on the rear surface is deviated by $\pi$, and these waves are in antiphase. Accordingly, the reflected wave reflected on the front surface of the dielectric layer 19 (shown by the solid line in Fig. 6) and the reflected wave reflected on the rear surface of the dielectric layer 19 (shown by the long dashed double-short dashed line in Fig. 6) offset each other. In other words, the phases are cancelled. This effectively limits the reflection of millimeter waves on the dielectric layer 19 and thus improves the accuracy in detecting the object by the millimeter wave radar device 13.

Referring to Fig. 1, when millimeter waves are transmitted from a millimeter wave radar device (not shown) of a different vehicle, some of the millimeter waves strike the millimeter wave reflection portion 21 of the metal layer 16 of the front grille 12 of the vehicle 11 (shown in Fig. 1). Then, the millimeter waves from the different vehicle are sufficiently reflected on the millimeter wave reflection portion 21 of the metal layer 16.

The millimeter waves that have struck and have been reflected by the millimeter wave reflection portion 21 are again received by the millimeter wave radar device of the different vehicle. Using the transmitted and received millimeter waves, the millimeter wave radar device of the different vehicle recognizes the vehicle 11 and detects, for example, the distance between the different vehicle and the vehicle 11. In such a manner, the millimeter waves from the different vehicle are sufficiently reflected on the millimeter wave reflection portion 21 of the metal layer 16. This improves the accuracy in detecting the vehicle 11 by the millimeter wave radar device of the different vehicle.

The heater wires 23, which are arranged in the millimeter wave passage portion 20 of the metal layer 16 of the front grille 12, generate heat when energized. This heat is transmitted to the front surface of the front grille 12 exposed to the outside of the vehicle 11 so that the front surface of the front grille 12 is heated. Thus, even if ice and snow adhere to the front surface of the front grille 12, the ice and snow are quickly melted by the heat conveyed from the heater wires 23.

Thus, situations are limited in which the adhesion of ice and snow to the front surface of the front grille 12 prevents passage of the millimeter waves. That is, situations are limited in which the adhesion of ice and snow to the front surface of the front grille 12 lowers the detection performance of the millimeter wave radar device 13 of the vehicle 11. As a result, even in the case of snowy weather, the millimeter wave radar device 13 sufficiently recognizes the above-described object and detects the distance between the object and the vehicle 11, the relative speed, and the like.

Next, an example of the dielectric layer 19 of the front grille 12 that satisfies the above-described equation 1 will be described. In this example, the dielectric layer 19, that is, the base layer 14, first adhesive layer 15, second adhesive layer 17, and film layer 18 are all made of polycarbonate, which serves as a dielectric. The frequency of each millimeter wave is 76.5 GHz. Wavelength $\lambda$ of this millimeter wave in the air is calculated to be 3.92 mm by dividing the speed of the millimeter wave ($3.0 \times 10^8$ m/s) by the frequency of the millimeter wave ($76.5 \times 10^9$ Hz).

The relative permittivity $\varepsilon_r$ of polycarbonate is 2.703, and n is an integer greater than or equal to 0. Wavelength $\lambda g$

of each millimeter wave in the polycarbonate is calculated to be 2.38 mm by dividing the wavelength $\lambda$ (3.92 mm) of the millimeter wave in the air by the square root of the relative permittivity $\varepsilon_r$ (2.703) of the polycarbonate.

When 2.38 is substituted into $\lambda g$ in the above-described equation 1, as shown in the graph of Fig. 8, thickness $L_1$ of the dielectric layer 19 that is optimal for the passage of millimeter waves is 1.19 mm, 2.38 mm, .... That is, the dielectric layer 19 is in an anti-reflective state in which the reflection coefficient R is 0 when thickness $L_1$ is the half of the wavelength of a millimeter wave in the dielectric of the dielectric layer 19.

If the base layer 14, first adhesive layer 15, second adhesive layer 17, and film layer 18 of the dielectric layer 19 in the front grille 12 are made of different resin materials as described above, these thicknesses simply need to be individually set based on the above-described equation 1 and combined with one another.

However, depending constraints on a product such as the front grille 12 or the specification of the product, for example, setting the thickness of each of the base layer 14, first adhesive layer 15, second adhesive layer 17, and film layer 18 to be optimal for the passage of millimeter waves may be difficult. In such a case, for millimeter waves to pass through the entire product, the average relative permittivity of dielectrics of the product is calculated.

In one example, the relative permittivity of a product in which four dielectrics are laminated is calculated. In this case, the relative permittivities of the four dielectrics are respectively $\varepsilon_A$, $\varepsilon_B$, $\varepsilon_C$, $\varepsilon_D$; the thicknesses of the four dielectrics are respectively $t_A$, $t_B$, $t_C$, $t_D$; and the total thickness of them is $t_{total}$. The average relative permittivity of the four dielectrics is obtained using the following equation 9.

$$\frac{(\varepsilon_A * t_A) + (\varepsilon_B * t_B) + (\varepsilon_C * t_C) + (\varepsilon_D * t_D)}{t_{total}} \quad \text{(equation 9)}$$

For example, $\varepsilon_A$, $\varepsilon_B$, $\varepsilon_C$, $\varepsilon_D$, are respectively 2.0, 2.7, 2.5, 2.6; and $t_A$, $t_B$, $t_C$, $t_D$, are respectively 0.4 mm, 4.2 mm, 0.1 mm, 1.2 mm. In this case, $t_{total}$ (total of $t_A$, $t_B$, $t_C$, $t_D$) is 5.9 mm. When these values are substituted into the above-described equation 9, the average relative permittivity is 2.63. Thus, the product including the four dielectrics is interpreted as a product in which the relative permittivity $\varepsilon_r$ is 2.63 and thickness L is 5.9 mm.

As described above, when each millimeter wave has a frequency of 76.5 GHz, wavelength $\lambda$ of the millimeter in the air is 3.92 mm. When 2.63 is substituted into $\varepsilon_r$ and 3.92 is substituted into $\lambda$ in the above-described equation 9, thickness L of the above-described product is 1.21n (n is an integer greater than or equal to 0). That is, the product allows millimeter waves to pass through to a maximal extent when thickness L is an integral multiple of 1.21 mm. Thus, when thickness L of the product is 5.9 mm, millimeter waves are not allowed to pass through to an optimal extent.

Accordingly, in order for millimeter waves each having a frequency of 76.5 GHz to pass through the product to an optimal extent, thickness L and the relative permittivity $\varepsilon_r$ of the product simply need to be adjusted. Further, in order for millimeter waves to pass through the product to an optimal extent when thickness L is 5.9 mm and the relative permittivity $\varepsilon$ is 2.63, the frequency of the millimeter wave simply needs to be changed.

The embodiment described above in detail has the following advantages.

    (1) The front grille 12 includes the dielectric layer 19 and the metal layer 16. The dielectric layer 19 includes a dielectric. The metal layer 16 is made of metal. The metal layer 16 includes the millimeter wave passage portion 20, through which millimeter waves pass, and the millimeter wave reflection portion 21, which reflects millimeter waves. The front grille 12 includes the heater wire 23. The heater wire 23 is located on the millimeter wave passage portion 20, and generates heat when energized.

In this structure, the millimeter waves transmitted from a millimeter wave radar device of a different vehicle are reflected on the millimeter wave reflection portion 21. In addition, the heater wire 23 is energized to generate heat so as to melt ice and snow that adhere to the front surface of the front grille 12 corresponding to the millimeter wave passage portion 20. This allows the vehicle 11 to be easily detected by the millimeter wave radar device of the different vehicle and limits situations in which the adhesion of ice and snow lowers the detection performance of the millimeter wave radar device 13 of the vehicle 11.

(2) In the front grille 12, the millimeter wave reflection portion 21 has a mesh pattern.

This structure improves the conformability of the millimeter wave reflection portion 21 of the metal layer 16 to the shape of the front grille 12, which is used as a product. Thus, the degree of freedom in designing the front grille 12 is improved. Accordingly, for example, the front grille 12 can be easily made three-dimensional.

(3) In the front grille 12, the millimeter wave reflection portion 21 includes the specific electromagnetic wave passage portions 22, through which electromagnetic waves each having a specific frequency pass.

In this structure, the millimeter wave reflection portion 21 can include, for example, a specific electromagnetic wave passage portion 22 through which radio waves (electromagnetic waves) of a mobile phone pass. This prevents the occurrence of communication failure for the mobile phone while reflecting, on the millimeter wave reflection portion 21, the millimeter waves transmitted from the millimeter wave radar device of the different vehicle.

(4) In the front grille 12, thickness $L_1$ of the dielectric layer 19 is set based on the above-described equation 1, where n is an integer greater than or equal to 0 and $\lambda g$ is a wavelength of each millimeter wave in the dielectric.

This structure allows millimeter waves to easily pass through the dielectric layer 19.

Modifications

The above-described embodiment may be modified as follows. The above-described embodiment and the following modifications can be combined as long as the combined modifications remain technically consistent with each other.

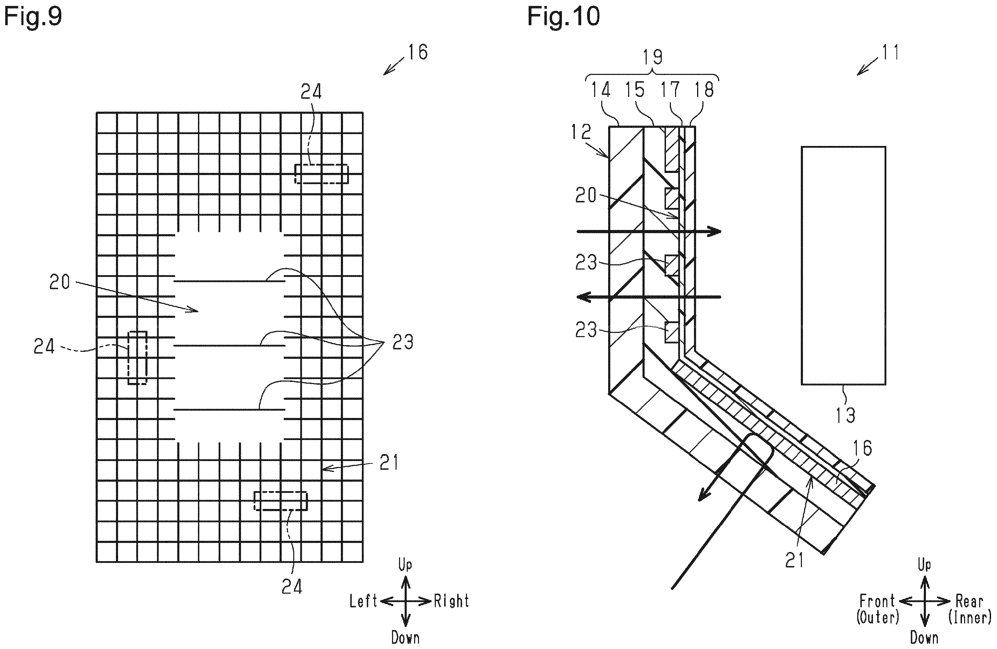

As shown in Fig. 9, electronic components 24 may be mounted in the millimeter wave reflection portion 21 of the metal layer 16. Examples of the electronic components 24 include a light emitting diode and a speaker. In this case, electronic circuits are formed by cutting part of the meshed copper film of the millimeter wave reflection portion 21.

As shown in Fig. 10, the front grille 12 may be substantially V-shaped. More specifically, the millimeter wave passage portion 20 of the metal layer 16 may be located in front of the millimeter wave radar device 13, and the millimeter wave reflection portion 21 of the metal layer 16 may be located on the diagonally lower front side of the millimeter wave radar device 13. In this structure, the millimeter wave reflection portion 21 limits situations in which, for example, when millimeter waves are transmitted from the millimeter wave radar device 13 of the vehicle 11 during traveling so as to strike and be reflected on the ground, the millimeter waves are detected by the millimeter wave radar device 13. That is, this structure limits situations in which the millimeter wave radar device 13 erroneously detects, for example, a protrusion on the ground as a different vehicle or the like.

Thickness $L_1$ of the dielectric layer 19 does not need to be set based on the above-described equation 1.

The millimeter wave reflection portion 21 does not need to include the specific electromagnetic wave passage portions 22.

The number and positions of the specific electromagnetic wave passage portion 22 on the millimeter wave reflection portion 21 may be changed.

The entire millimeter wave reflection portion 21 may include the specific electromagnetic wave passage portions 22.

The millimeter wave reflection portion 21 does not need to have a mesh shape. That is, for example, the millimeter wave reflection portion 21 may be formed using a metal foil.

The millimeter wave reflection portion 21 may include a specific electromagnetic wave reflection portion that reflects only electromagnetic waves each having a specific frequency.

The number of dielectrics included in the dielectric layer 19 in the front grille 12 may be changed.

In the front grille 12, the metal layer 16 may be bonded to the base layer 14 by insert-molding the metal layer 16 into the base layer 14. This makes the first adhesive layer 15 unnecessary.

The first adhesive layer 15 may include binder or adhesive.

The second adhesive layer 17 may be omitted.

The vehicle component is applicable as long as the vehicle component is incorporated in a vehicle equipped with a radar device transmitting and receiving electromagnetic waves that are used to detect an object outside the vehicle. In this case, examples of the electromagnetic waves transmitted and received by the radar device include electromagnetic waves, such as infrared rays, in addition to millimeter waves.

The radar device that transmits and receives electromagnetic waves used to detect an object outside a vehicle does not have to be a front-monitoring radar device. Instead, this radar device may be a rear-monitoring radar device, a side-monitoring radar device for the front part, or a side-monitoring radar device for the rear part. The vehicle component is arranged in front of the radar device in a direction in which electromagnetic wave are transmitted.

The vehicle component may be a vehicle exterior panel other than the front grille 12, for example, a bumper or a fender panel.

**Claims**

1. A vehicle component configured to be incorporated in a vehicle (11) equipped with a millimeter wave radar device (13) and to be arranged in a path of a millimeter wave transmitted and received by the millimeter wave radar device (13), the vehicle component comprising:

   a dielectric layer (19) including a dielectric;
   a metal layer (16) made of metal, the metal layer (16) including
   a millimeter wave reflection portion (21) that reflects the millimeter wave in an amount that corresponds to a value that is greater than or equal to -5 dB, and

a millimeter wave passage portion (20) through which the millimeter wave passes, the millimeter wave passage portion being an opening that is surrounded by the millimeter wave reflection portion (21) and designed to be located in front of the millimeter wave radar device (13);
**characterized in that** the vehicle component further comprises
heater wires (23) extending across the millimeter wave passage portion (20) of the metal layer (16), the heater wires (23) generating heat when energized.

2. The vehicle component according to claim 1, wherein the millimeter wave reflection portion (21) has a mesh pattern.

3. The vehicle component according to claim 1 or 2, wherein at least part of the millimeter wave reflection portion (21) includes a specific electromagnetic wave passage portion (22) through which an electromagnetic wave having a specific frequency other than the millimeter wave passes.

4. The vehicle component according to any one of claims 1 to 3, wherein

thickness $L_1$ of the dielectric layer (19) in an extending direction of the path is set based on the following equation 1:

$$L_1 = n\frac{\lambda g}{2} \quad \text{(equation 1)}$$

where n is an integer greater than or equal to 0 and $\lambda g$ is a wavelength of the millimeter wave in the dielectric.

**Patentansprüche**

1. Fahrzeugbauteil, das dazu ausgebildet ist, in ein Fahrzeug (11) eingebaut zu werden, das mit einer Millimeterwellen-Radareinrichtung (13) ausgestattet ist, und in einem Strahlengang einer von der Millimeterwellen-Radareinrichtung (13) gesendeten und empfangenen Millimeterwelle angeordnet zu werden, wobei das Fahrzeugbauteil umfasst:

eine dielektrische Schicht (19), die ein Dielektrikum aufweist;
eine Metallschicht (16), die aus Metall hergestellt ist, wobei die Metallschicht (16) aufweist einen Millimeterwellen-Reflexionsabschnitt (21), der die Millimeterwelle in einem Ausmaß reflektiert, das einem Wert von mindestens -5 dB entspricht, und
einen Millimeterwellen-Durchlassabschnitt (20), durch den die Millimeterwelle hindurchtritt, wobei der Millimeterwellen- Durchlassabschnitt eine Öffnung ist, die von dem Millimeterwellen-Reflexionsabschnitt (21) umgeben und dazu ausgelegt ist, vor der Millimeterwellen-Radareinrichtung (13) angeordnet zu sein;
**dadurch gekennzeichnet, dass** das Fahrzeugbauteil ferner umfasst
Heizdrähte (23), die sich über den Millimeterwellen- Durchlassabschnitt (20) der Metallschicht (16) erstrecken, wobei die Heizdrähte (23) bei Bestromung Wärme erzeugen.

2. Das Fahrzeugbauteil nach Anspruch 1, wobei der Millimeterwellen-Reflexionsabschnitt (21) ein Maschenmuster aufweist.

3. Das Fahrzeugbauteil nach Anspruch 1 oder 2, wobei zumindest ein Teil des Millimeterwellen-Reflexionsabschnitts (21) einen Durchlassabschnitt für spezifische elektromagnetische Wellen (22) enthält, durch den eine elektromagnetische Welle mit einer spezifischen Frequenz, die sich von der Millimeterwelle unterscheidet, hindurchtritt.

4. Das Fahrzeugbauteil nach einem der Ansprüche 1 bis 3, wobei

die Dicke $L_1$ der dielektrischen Schicht (19) in einer Erstreckungsrichtung des Strahlengangs auf der Grundlage der folgenden Gleichung 1 festgelegt ist:

$$L_1 = n\frac{\lambda g}{2} \quad \text{(Gleichung 1)}$$

wobei n eine ganze Zahl größer als oder gleich 0 ist und $\lambda g$ eine Wellenlänge der Millimeterwelle in dem Dielektrikum ist.

**Revendications**

1. Composant de véhicule configuré pour être incorporé dans un véhicule (11) équipé d'un dispositif radar à ondes millimétriques (13) et pour être disposé dans un trajet d'une onde millimétrique émise et reçue par le dispositif radar à ondes millimétriques (13), le composant de véhicule comprenant :

   une couche diélectrique (19) comprenant un diélectrique ;
   une couche métallique (16) constituée de métal, la couche métallique (16) comprenant une partie de réflexion d'ondes millimétriques (21) qui réfléchit les ondes millimétriques dans une quantité qui correspond à une valeur supérieure ou égale à -5 dB, et
   une partie de passage d'ondes millimétriques (20) à travers laquelle passent les ondes millimétriques, la partie de passage d'ondes millimétriques étant une ouverture qui est entourée par la partie de réflexion d'ondes millimétriques (21) et conçue pour être située devant le dispositif radar à ondes millimétriques (13) ;
   **caractérisé en ce que** le composant de véhicule comprend en outre des fils chauffants (23) s'étendant à travers la partie de passage d'ondes millimétriques (20) de la couche métallique (16), les fils chauffants (23) générant de la chaleur lorsqu'ils sont alimentés.

2. Composant de véhicule selon la revendication 1, dans lequel la partie de réflexion d'ondes millimétriques (21) présente un motif maillé.

3. Composant de véhicule selon la revendication 1 ou 2, dans lequel au moins une partie de la partie de réflexion d'ondes millimétriques (21) comprend une partie de passage d'onde électromagnétique spécifique (22) à travers laquelle passe une onde électromagnétique ayant une fréquence spécifique autre que celle des ondes millimétriques.

4. Composant de véhicule selon l'une quelconque des revendications 1 à 3, dans lequel l'épaisseur $L_1$ de la couche diélectrique (19) dans une direction d'extension du trajet est définie sur la base de l'équation 1 suivante :

$$L_1 = n\frac{\lambda g}{2} \text{ (équation 1)}$$

où n est un nombre entier supérieur ou égal à 0 et Àg est une longueur d'onde de l'onde millimétrique dans le diélectrique.

Fig.1

$L_1$

12

23

23

20

21

16

14 15 17 18

19

11

13

Up

Front (Outer) ↔ Rear (Inner)

Down

Fig.2

16

22    22

23

20

M

21

22    22

M

Up

Left ↔ Right

Down

EP 4 155 132 B1

## Fig.3

Millimeter waves pass through
Millimeter waves are reflected

Passage
Amount
Reflection
Amount

Millimeter waves do not pass through
Millimeter waves are not reflected

[dB]

Passage
Amount

Reflection
Amount

Distance M between centers of
copper films adjacent to each other

## Fig.4

14, 15

22

12

Incident
Wave

Spreading
Wave

Spreading
Wave

Spreading
Wave

Spreading
Wave

Passing
Wave

16    17, 18

Fig.5

Fig.6

Fig.7

Passing
Wave

Incident
Wave

$L_1$

12

19

11

13

Reflected
Wave

Up

Front
(Outer)

Rear
(Inner)

Down

Fig.8

Large

Reflection
Amount

Small

Small $L_1$
(1.19)

Thickness

$L_1$
(2.38)

Large

Fig.10

Fig.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020044869 A
- US 20210063530 A1
- WO 2019035296 A1